## Europäisches Patentamt

## European Patent Office

## Office européen des brevets

(19)

(11) Veröffentlichungsnummer. **0 039 487**
**B1**

(12) **EUROPÄISCHE PATENTSCHRIFT**

(45) Veröffentlichungstag der Patentschrift:
**19.09.84**

(51) Int. Cl.³ **B 65 G 67/62**

(21) Anmeldenummer: **81103276.2**

(22) Anmeldetag: **30.04.81**

(54) **Fördereinrichtung zur steilen Entladung von Schiffen und sonstigen Behältern.**

(30) Priorität: **07.05.80 CH 3550/80**

(43) Veröffentlichungstag der Anmeldung:
**11.11.81 Patentblatt 81/45**

(45) Bekanntmachung des Hinweises auf die Patenterteilung:
**19.09.84 Patentblatt 84/38**

(84) Benannte Vertragsstaaten:
**DE FR GB IT NL SE**

(56) Entgegenhaltungen:
**CH - A - 251 563**
**CH - A - 487 794**
**DE - A - 2 018 120**
**DE - B - 1 456 715**
**DE - C - 127 752**
**FR - A - 1 502 877**
**FR - A - 2 029 505**
**NL - A - 7 408 403**
**US - A - 1 633 627**
**US - A - 2 100 924**
**US - A - 3 640 376**

(73) Patentinhaber: **Gebrüder Bühler AG, CH-9240 Uzwil (CH)**

(72) Erfinder: **Straub, Paul, Feldholzstrasse 12a,**
**CH-9242 Oberuzwil (CH)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund, B.Sc. Morgan**
**Robert-Koch-Strasse 1, D-8000 München 22 (DE)**

BUNDESDRUCKEREI BERLIN

## Beschreibung

Die Erfindung betrifft eine Fördereinrichtung zur steilen Entladung von Schiffen und sonstigen Behältern, mit einem Steilförderer, der einen Fördertrog zwischen Aufnahmefuß und Antriebskopf aufweist und an einen einen Auslegerförderer tragenden Ausleger angeschlossen ist, welcher ein Gelenkglied eines Parallelogrammgestänges ist, welches noch einen Turm, insbesondere Drehturm als feststehendes, hinteres Gelenkglied, ein parallel zum Ausleger verlaufendes, weiteres Gelenkglied und ein dieses mit dem Ausleger verbindendes, vorderes Gelenkglied aufweist, welches aus seitlich des Steilförderers angeordneten Gliedern besteht und welches bei einem Auf- und Abfahren des Auslegers seine Neigung relativ zu einer Vertikalen beibehält und wobei der Steilförderer um eine horizontale, erste Schwenkachse am vorderen Gelenkglied angelenkt ist und in einer parallel zur Ebene des Parallelogrammgestänges verlaufenden Förderebene durch Kraftzylinder-Kraft um diese erste Schwenkachse relativ zum vorderen Gelenkglied verschwenkbar ist.

Im Betrieb einer Fördereinrichtung der genannten Art wird der Ausleger mit dem Steilförderer am Anfang und am Ende des Entladungsvorganges ab- bzw. aufgefahren, und zusätzlich in seiner Förderebene um einen nach Maßgabe der jeweiligen Bedingungen gewählten Schwenkwinkel relativ zur Vertikalen verschwenkt. Diese Verschwenkung kann notwendig werden, um Hindernisse im Weg des Steilförderers auszuweichen. Sie kann auch im Laufe des Entladungsvorganges notwendig werden, wenn die Entladungsstelle im Schiff oder Behälter verlegt werden soll. Manchmal muß die Verschwenkung in einer in das Produkt eingesenkten Stellung des Steilförderers durchgeführt werden, mit der Folge, daß sehr ungünstige Bedingungen bezüglich den auf den Steilförderer einwirkenden Kräften und Momenten entstehen können.

Bei den üblichen Konstruktionen solcher Fördereinrichtungen sind meistens Maßnahmen getroffen, die Neigung des Steilförderers während seines Auf- und Abfahrens konstant zu halten. Dies erleichtert das Steuern der Steilfördererbewegung durch den Betriebsmann und trägt zum ungestörten Ablauf des Gesamtbetriebes bei.

Bei einer solchen, in der DE-A-1 456 715 offenbarten Fördereinrichtung ist ein Eimerkettenförderer um die Drehachse seines oberen Kettenrades am vorderen Gelenkglied des Parallelogrammgestänges verschwenkbar angelenkt, wobei die Drehachse etwa in der Mittelhöhe des vorderen Gelenkgliedes, auf der dem Ausleger abgewendeten Seite und im Abstand vor der die Anlenkachsen des vorderen Gelenkgliedes am Parallelogrammgestänge verbindenden Linie angeordnet ist. Als Schwenkvorrichtung ist ein Kraftzylinder vorgesehen, der am Eimerkettenförderer und in der unteren Anlenkachse des vorderen Gelenkgliedes angelenkt ist. Der Eimerkettenförderer ist in seiner Förderebene verschwenkbar, jedoch nur nach außen etwa aus einer vertikalen Stellung in der Richtung vom als Fahrwagen ausgebildeten Turm weg.

Bei einer anderen, in der FR-A-2 029 505 offenbarten Fördereinrichtung besitzt das Parallelogrammgestänge den Ausleger entweder als oberes oder unteres Gelenkglied sowie ein parallel zum letzteren verlaufendes, unteres bzw. oberes Gelenkglied, und zwei diese miteinander verbindende vordere und hintere Gelenkglieder. Der Steilförderer ist vom vorderen Gelenkglied getragen und an diesem starr befestigt; er führt somit dessen Bewegungen mit aus. Das hintere Gelenkglied ist in einer Anlenkachse des Auslegers am Drehturm angelenkt und relativ zu diesem verschwenkbar angeordnet. Bei einem Auf- und Abfahren wird das ganze Parallelogrammgestänge um die besagte Anlenkachse des Auslegers herum verschwenkt. Zur Verschwenkung des Steilförderers hingegen, wird das vordere Gelenkglied zusammen mit den restlichen beiden Gelenkgliedern relativ zum Ausleger verschwenkt und der Steilförderer mit dem vorderen Gelenkglied mitverschwenkt. In jeder Schwenkstellung des Steilförderers ist die Geometrie des Parallelogrammgestänges verschieden. In den äußeren Schwenkstellungen des Steilförderers wird das Parallelogrammgestänge flach, wobei seine in Längsrichtung verlaufenden Gelenkglieder größere Kräfte aufnehmen müssen. Dies begrenzt den zulässigen Schwenkwinkel des Steilförderers unter ungünstigen Belastungsbedingungen. Die Steuerung der momentanen Schwenkstellung des Steilförderers ist verhältnismäßig kompliziert, da sowohl Auf- und Abfahren des Parallelogrammgestänges als auch die Schwenkbewegung des hinteren Gelenkgliedes zu einer Verschwenkung des Steilförderers führen.

Aufgabe der Erfindung ist es, eine Fördereinrichtung der eingangs erwähnten Art zu schaffen, bei welcher durch einfache Konstruktionsmaßnahmen eine Erweiterung des Verschwenkbereiches des Steilförderers in seiner Förderebene, bei gleichzeitiger Verbesserung der Fertigkeitsverhältnisse und der Wirtschaftlichkeit erreicht werden kann, d. h. die Funktion der Fördereinrichtung soll mit weniger baulichem Aufwand ermöglicht werden, gleichzeitig soll auch eine verlustlose und staubfreie Abfuhr des vom Steilförderer entladenen Produktes erreicht werden.

Eine Fördereinrichtung zur Lösung dieser Aufgabe zeichnet sich dadurch aus, daß die Schwenkachse des Steilförderers mit einer Anlenkachse des vorderen Gelenkgliedes am Parallelogrammgestänge zusammenfällt, und daß die seitlich des Steilförderers angeordneten Glieder des vorderen Gelenkgliedes einen Durchgangsraum für eine ungehinderte Verschwenkung des Steilförderers aus seiner vertikalen Stellung in beiden Richtungen vom Drehturm weg und zum Drehturm hin bilden.

Eine bevorzugte Ausführungsform zeichnet sich dadurch aus, daß sowohl das vordere Ende des Auslegers als auch das vordere Ende des weiteren Gelenkgliedes gabelförmig ausgebildet sind.

Die Erfindung besitzt den Vorteil, daß bei einer grundsätzlich vorteilhaften Konstruktion, bei welcher der Steilförderer relativ zum vorderen Gelenkglied des Parallelogrammgestänges verschwenkbar ist, durch zweckmäßige Wahl der Schwenkachse des Steilförderers, und durch zweckmäßige Ausbildung des den Steilförderer tragenden, vorderen Gelenkgliedes, der Steilförderer aus seiner vertikalen Stellung in beiden Richtungen um große Schwenkwinkel, bis zu 40° verschwenkbar ist, ohne daß bei einer solchen Verschwenkung eine Änderung in der Relativstellung der Gelenkglieder des Parallelogrammgestänges, oder eine nennenswerte Änderung in den Festigkeitsverhältnissen in Kauf genommen werden müßte. Die Änderung des Steilförderers an einer Anlenkachse des vorderen Gelenkgliedes ermöglicht eine besonders einfache und leichte Ausbildung desselben. Die Konstruktion ist kompakt und braucht trotz ihrer vorzüglichen Anpaßbarkeit und vielseitiger Verwendbarkeit, insbesondere in vertikaler Richtung, wenig Platz. Außerdem eignet sich die Konstruktion zum Einbau einer Anzahl weiterer, vorteilhafter Merkmale, z. B. am vorderen Gelenkglied angeordnete, gegenläufig wirkende Kraftzylinder als Schwenkvorrichtung, ein am Ausleger starr befestigter Auslegerförderer, eine kardanische Aufhängung des Steilförderers am vorderen Gelenkglied und eine um die Schwenkachse des Steilförderers herum verschwenkbare Austragsvorrichtung. Eine solche Fördereinrichtung ist vielseitig anwendbar, betriebssicher, kompakt, platzsparend, insbesondere in der Höhe, und wirtschaftlich.

Vorteilhafterweise ist die Schwenkachse des Steilförderers so gewählt, daß sie mit der Anlenkachse des vorderen Gelenkgliedes am Ausleger zusammenfällt. Besonders bevorzugt ist eine Anordnung, bei der der Ausleger als oberes Gelenkglied des Parallelogrammträgers ausgebildet ist, so daß die Schwenkachse des Steilförderers möglichst hoch liegt. Dank dieser Anordnung braucht der Steilförderer weniger geneigt zu werden, um bis zur Seitenwand der Schiffsluke zu gelangen, als wenn die Schwenkachse tiefer angeordnet wäre.

Bei einer praktischen Variante des vorderen Gelenkgliedes bilden dessen Glieder einen Rahmen mit zwei von diesen nach unten oder nach oben ragenden Schenkeln, wobei der Rahmen am Ausleger und die Schenkel am unteren Gelenkglied angelenkt sind. Ein vom Rahmen umgebener und sich zwischen den Schenkeln nach unten erstreckender Durchgangsraum ist zur Aufnahme des Steilförderers ausgebildet. Jeder Schenkel ist durch zwei zueinander geneigt angeordnete Stäbe gebildet, die an ihren einen Enden mit dem Rahmen und an ihren anderen Enden mit einer am parallel zum Ausleger verlaufenden Gelenkglied angelenkten Lasche fest verbunden sind. Diese Variante des vorderen Gelenkgliedes ist einfach und billig, sie erfüllt ihre Funktion als Anlenkjoch für den Steilförderer einwandfrei, und erlaubt eine ungehinderte Verschwenkung des letzteren aus seiner vertikalen Stellung in beiden Richtungen.

Als Schwenkvorrichtung können mit Vorteil oberhalb oder unterhalb der Schwenkachse des Steilförderers mindestens zwei zueinander gegenläufig wirkende Kraftzylinder vorgesehen sein, die jeweils mit ihrem einen Ende am Steilförderer, und ihrem anderen Ende am vorderen Gelenkglied angelenkt sind. Einer der beiden Kraftzylinder ist dabei mit Vorteil an der Vorderseite, und der andere an der Hinterseite des Steilförderers angebracht. Mit hydraulischen oder pneumatischen Zylindern kann die Verschwenkung des Steilförderers problemlos bewerkstelligt werden.

Bei einer besonders vorteilhaften Ausgestaltung der Schwenkvorrichtung ist eine Mehrzahl von an beiden Seiten der Schwenkachse des Steilförderers angeordneten, miteinander zusammenwirkenden Kraftzylindern vorgesehen. Diese sind vorzugsweise aufeinander so abgestimmt, daß sich die Ausstellkräfte, die beim Ausstellen des Steilförderers auf diesen einwirken, gegenseitig ausgleichen, so daß auf dem Steilförderer lediglich ein Ausstellmoment wirksam bleibt.

Dies kann auf einfache Weise durch Verwendung von je zwei zueinander gegenläufig wirkenden Kraftzylindern gleicher Größe auf beiden Seiten der Schwenkachse des Steilförderers bewerkstelligt werden. Die Schwenkachse wird dabei lediglich mit dem Gewicht des Steilförderers belastet.

Vorteilhafterweise ist das vordere Ende des Auslegers als Gabel mit zwei Armen ausgebildet. Vorzugsweise wird am Ende jedes Armes der Gabel eine nach oben ragende Konsole fest angebracht, auf welcher ein Lager zur Lagerung eines die Schwenkachse bestimmenden Drehzapfens befestigt ist. Das parallel zum Ausleger verlaufende Gelenkglied hingegen, dessen vorderes Ende auch gabelförmig ist, ist als Halterahmen mit Längsholmen und Traversen ausgebildet, wobei am vorderen Ende des Halterahmens die Längsholme zueinander geneigt sind und je eine Anlenkgabel aufweisen, in welcher ein Schenkel des vorderen Gelenkgliedes angelenkt ist. Diese sind unaufwendige Konstruktionsmerkmale zur Anlenkung des den Steilförderer tragenden, vorderen Gelenkgliedes am Ausleger und am Halterahmen.

Nach einer weiteren, sehr vorteilhaften Ausgestaltung der Erfindung ist der Steilförderer universal bzw. kardanisch aufgehängt. Vorzugsweise ist der Steilförderer durch eine von zwei die erste Schwenkachse bestimmenden Drehzapfen getragene zweite Drehachse abgestützt, die quer zu den Drehzapfen und mit diesen in einer Ebene angeordnet ist und eine seitliche Verschwenkung des Steilförderers aus der vertikalen, mittleren Lage der Förderebene um die von dieser Drehachse bestimmte zweite Schwenkachse erlaubt. Diese an sich einfache Konstruktion ermöglicht eine Verschwenkung des Steilförderers in beliebiger Richtung. Damit kann auch eine Übertragung von Torsionskräften auf den Ausleger vermieden werden, wodurch wiederum ein leichterer Aufbau möglich ist. Eine Förderung von Schüttgut aus sonst nicht zugänglichen Stellen ist unter Umständen möglich.

Vorzugsweise sind die in Lagern des Auslegers drehbar gelagerten Drehzapfen und die zweite Drehachse an einem Rahmen angeordnet, mit welchem sie eine kardanische Aufhängung bilden.

Die vorgenannten Möglichkeiten stellen Lösungen dar, die die angestrebte Funktion auf einfache und praktische Weise mit kleinem Bauaufwand einwandfrei erfüllen.

Bei einer bevorzugten Ausführungsform der Fördereinrichtung, bei welcher die Austragsvorrichtung eines um eine erste Schwenkachse verschwenkbaren Steilförderers seitlich der Förderebene angeordnet ist und in einen Einlaufkasten des Auslegerförderers einmündet, kann ein ungestörtes Überführen des Schüttgutes auf den Auslegerförderer erzielt werden, sowohl bei Verschwenkung des Steilförderers um die erste Schwenkachse in der Förderebene als auch bei Verschwenkung des Steilförderers um eine quer zur ersten Schwenkachse liegende zweite Schwenkachse, wenn in an sich bekannter Weise die Austragsvorrichtung an ihrem Eigangsende mit einem an den Förderring angeschlossenen Auswurfkasten fest verbunden ist und ein koaxial zu der ersten Schwenkachse angeordnetes Ausgangsende besitzt, welches in den Einlaufkasten einmündet und relativ zu diesem um die erste Schwenkachse drehbeweglich angeordnet ist, und wenn das Eingangsende der Austragsvorrichtung in einem stromaufwärts gelegenen Oberteil und ihr Ausgangsende in einem mit einem die erste Schwenkachse bestimmenden Drehzapfen fest verbundenen, stromabwärts gelegenen Unterteil ausgebildet ist und das Oberteil über eine teleskopierende Verbindung mit dem Unterteil verbunden ist, wodurch eine Verschwenkung des steilen Förderers seitlich aus der Förderebene um seine zweite Schwenkachse stattfinden kann, ohne die durch die Austragsvorrichtung begrenzte Austragsbahn zu unterbrechen.

Dabei ist die teleskopierende Verbindung der beiden Teile mit Vorteil in den zur zweiten Schwenkachse am nächsten liegenden Bereich der Austragsvorrichtung angeordnet und die Teleskopierbewegung zwischen den teleskopierenden Enden der beiden Teile verläuft entlang einer kreisförmigen Bahn, deren Mittelpunkt sich auf der zweiten Schwenkachse befindet.

Die vorgenannten Merkmale ermöglichen eine allseitige Verschwenkung des Steilförderers bei Beibehaltung der Verbindung zwischen der Austragsvorrichtung und dem Einlaufkasten. Damit wird ein ununterbrochener Schüttgutstrom in allen Stellungen des Steilförderers gewährleistet.

Die obenerwähnten Konstruktionen ermöglichen die Anbringung von Dichtungen zwischen dem Ausgangsende des Unterteils und dem Einlaufkasten bzw. zwischen dem Oberteil und dem Unterteil, so daß die Austragsbahn voll abgedichtet sein kann und ein verlust- und staubfreier Austrag des geförderten Produktes gewährleistet ist. Bevorzugte Beispiele für diese Dichtungen sind der Figurenbeschreibung zu entnehmen.

Naturgemäß kann der Steilförderer entweder einen einzelnen Fördertrog aufweisen — hier wäre der Steilförderer z. B. als Schneckenförderer auszubilden — oder sowohl einen Fördertrog als auch einen Rücklauftrog. In letzterem Fall könnte z. B. ein endloser Kettenförderer benutzt werden. Der Steilförderer könnte aber auch als Becherwerk, als Schlauchband oder als Doppelförderband mit zusammenlaufenden Rändern der beiden Bänder, aber auch anders, ausgebildet werden. Für den Fall, daß der Steilförderer sowohl einen Fördertrog als auch einen Rücklauftrog aufweist, kann bei einer Anordnung mit ersten und zweiten Schwenkachsen, die zweite Schwenkachse durch eine zwischen den beiden Drehzapfen hindurchgehende, in Lagern der Tröge drehbar gelagerte Drehwelle bestimmt sein, wobei der Rahmen der kardanischen Aufhängung zwischen den Trögen angeordnet ist.

Vorzugsweise ist der Ausleger als oberes Gelenkglied des Parallelogrammgestänges ausgebildet.

Bevorzugt ist zwischen dem Parallelogrammgestänge und dem Turm zumindest eine die Schwenklage des Parallelogrammgestänges bestimmende Fluidzylinderanordnung angeordnet.

Nachstehend werden Ausführungsbeispiele der Erfindung anhand der Zeichnung erläutert. Es zeigt

Fig. 1 eine Fördereinrichtung zur Entladung eines Schiffes mittels eines von einem fahrbaren Unterbau getragenen Steilförderers;

Fig. 2 ein Detail der Fig. 1, in welchem die Anbringung des Steilförderers an einen Ausleger des fahrbaren Unterbaus in größerem Maßstab dargestellt ist;

Fig. 3 einen vereinfachten Schnitt entlang der Linie III-III in Fig. 2;

Fig. 4 eine vereinfachte schematische Draufsicht auf das Detail der Fig. 2, zum Teil im Schnitt;

Fig. 5 eine Draufsicht auf den in den Fig. 2 und 4 sichtbaren Halterahmen;

Fig. 6 einen der Fig. 3 ähnlichen Schnitt, in welchem der Steilförderer kardanisch aufgehängt ist;

Fig. 6A ein Detail der Fig. 6;

Fig. 7 einen Querschnitt durch den Steilförderer und die kardanische Aufhängung nach der Fig. 6;

Fig. 8 einen den Fig. 6 und 3 ähnlichen Schnitt durch eine weitere Ausführungsform; und

Fig. 8A, 8B, 8C verschiedene Ausführungen einer mit den Ausführungsformen der Fig. 3, 6 und 8 anwendbaren Dichtung.

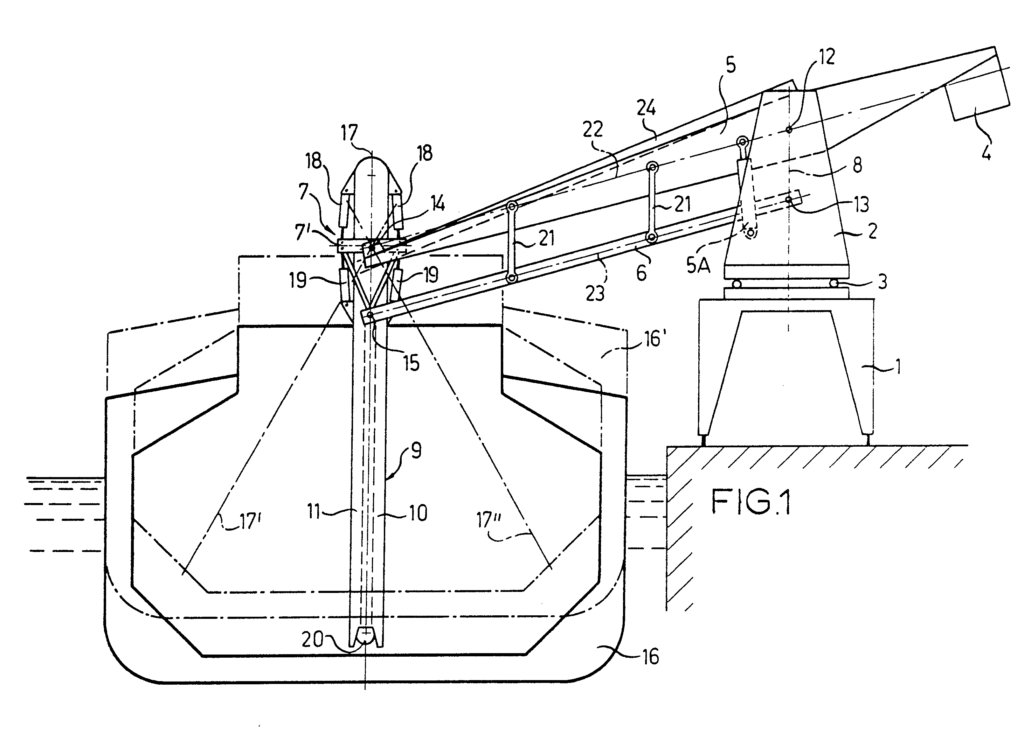

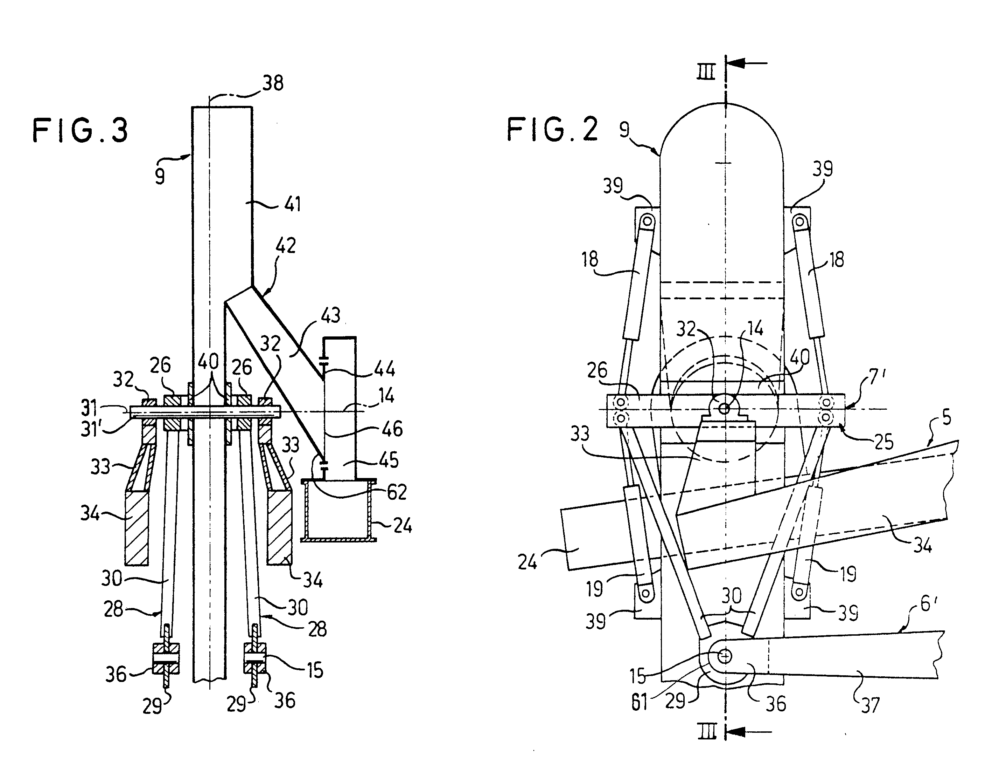

In der Fig. 1 ist an einem fahrbaren Unterbau 1 ein Drehturm 2 über ein Drehlager 3 drehbar angeordnet. Zwei Gelenkglieder eines Parallelogrammgestänges, ein mit einem Gegengewicht 4 versehener Ausleger 5 und ein unter diesem verlaufendes, unteres Gelenkglied 6, sind am Drehturm 2 im Abstand voneinander angelenkt. Ein vorderes Gelenkglied 7 ist in einer oberen Anlenkachse 14 am Ausleger 5, und in einer unteren Anlenkachse 15 am unteren Gelenkglied 6 angelenkt. Das mit Bezugnahme auf die Fig. 2 und 3 weiter unten im Detail beschriebene, vordere Gelenkglied 7 ist als Anlenkjoch 7' für einen in ein zu entladendes Schiff 16 hineinragenden Steilförderer 9 ausgebildet. Das Schiff 16 ist in seiner beladenen untersten Stellung mit voll ausgezogenen Linien dargestellt, in seiner entladenen obersten Stellung, hingegen, mit strichpunktierten Linien angedeutet und mit der Bezugsziffer 16' versehen.

Die Anlenkachsen 12, 13 des Auslegers 5 bzw. des unteren Gelenkgliedes 6 am Drehturm 2, zusammen mit den Anlenkachsen 14, 15 des vorderen Gelenkgliedes 7 am Ausleger 5 bzw. am unteren Gelenkglied 6 sind in Eckpunkten eines Parallelogrammes angeordnet. Die entsprechenden vier Gelenkglieder 5, 6, 7, 8 ergeben ein Parallelogrammgestänge, dessen vorderes Gelenkglied 7 während eines Auf- und Abfahrens des Auslegers 5 in seiner Neigung relativ zu einer Vertikalen unverändert bleibt.

Das Auf- und Abfahren des Auslegers, d. h. eine Änderung der Schwenklage des Parallelogrammgestänges kann z. B. durch die Anbringung zumindest einer Fluidzylinderanordnung 5a in der dargestellten Lage zwischen Ausleger 5 und Drehturm 2 bewerkstelligt werden. Man denkt insbesondere an die gezeigte Anordnung mit zwei beiderseits des Auslegers angeordneten Kraftzylindern oder an eine Anordnung mit einem mittig angeordneten Kraftzylinder.

In der Fig. 1 weisen die strichpunktiert gezeigten Achsen 17', 17'' auf die relativ zu einer vertikalen Stellung 17 geneigten, äußersten Stellungen des Steilförderers 9, in welche dieser mittels den Kraftzylindern 18, 19, die jeweils am Anlenkjoch 7' und am Steilförderer 9 angelenkt sind, verschwenkt werden kann. Am Steilförderer 9 sind noch der Fördertrog 10, der Rücklauftrog 11, und die Umlenkrolle 20 für die in der Zeichnung nicht dargestellte Mitnehmerkette angedeutet. Ferner sind zwischen den äußeren Gelenkgliedern 7, 8, jeweils am Ausleger 5 und am unteren Gelenkglied 6 schwenkbar angelenkte Zwischenstützen 21 zur Verhinderung der Ausknickung des als unteres Gelenkglied 6 ausgebildeten, auf Knickung beanspruchten Halterahmens 6' vorgesehen. Ein Auslegerförderer 24 ist seitlich am Ausleger 5 fest angeordnet.

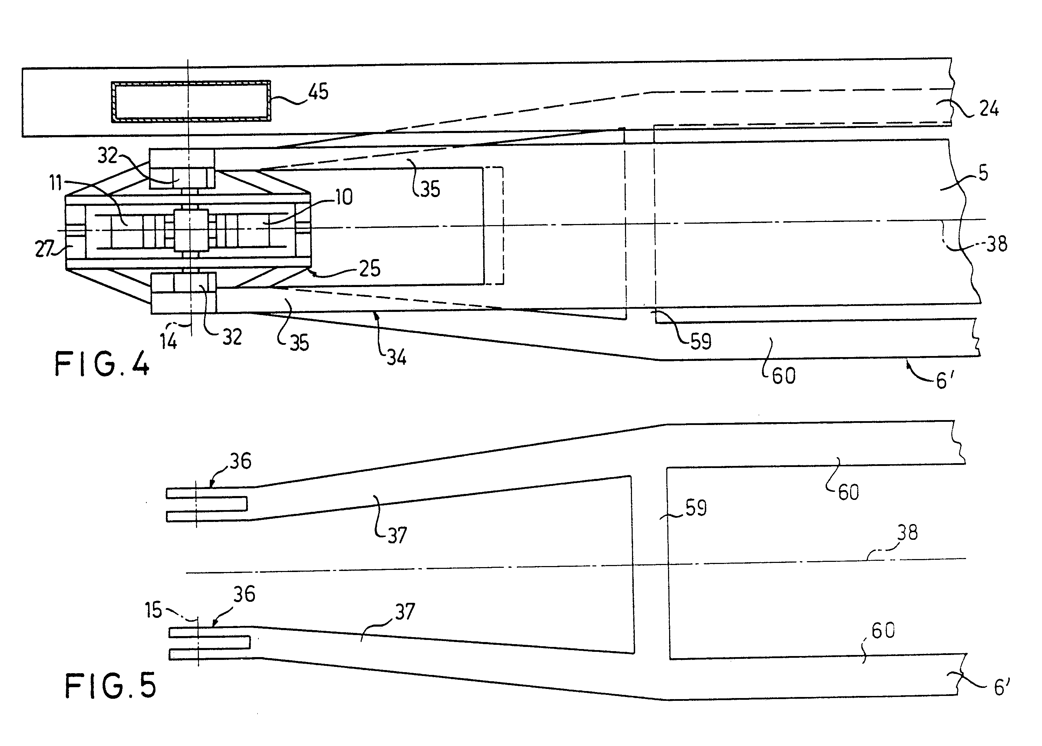

Aus den Fig. 2, 3 und 4 gehen die Details der Anlenkung des Steilförderers 9 am Anlenkjoch 7', und die des Anlenkjoches 7' am Ausleger 5 und an dem als unteres Gelenkglied 6 ausgebildeten Halterahmens 6' deutlich hervor. Das Anlenkjoch 7' weist einen den Steilförderer 9 umgebenden, rechteckigen Rahmen 25 aus zwei Längsstäben 26 und zwei Querstäben 27 auf, sowie zwei von den Längsstäben 26 nach unten ragende Schenkel 28. Jeder Schenkel 28 ist durch zwei in einer Lasche 29 zusammenlaufenden Stäben 30 gebildet. Ein durch den Steilförderer 9 und die beiden Längsstäbe 26 des Rahmens 25 hindurchragender Drehzapfen 31' bestimmt eine erste Schwenkachse 31 für den Steilförderer und ist an seinen beiden Enden in den Lagern 32 schwenkbar gehalten. Diese Lager 32 sind auf Konsolen 33 befestigt, die wiederum auf zwei Armen 35 einer am freien Ende des Auslegers 5 ausgebildeten Gabel 34 fest angebracht sind und nach oben ragen. Damit ist der Steilförderer 9 um die Anlenkachse 14 des Anlenkjoches 7' am Ausleger 5 herum schwenkbar gelagert. Aufgrund der Ausbildung der Schenkel 28 bleibt das Anlenkjoch 7' in einer horizontalen Stellung trotz der Bewegungen des Parallelogrammgestänges. Selbstverständlich sind die an dem Drehzapfen 31' angelenkten Teile achsial gesichert (nicht gezeigt).

Die Laschen 29 der beiden Schenkel 28 des Anlenkjoches 7' sind an je einer Anlenkgabe 36 angelenkt, die an den freien Enden zweier Arme 37 des Halterahmens 6' zweckentsprechend ausgebildet sind. Die Arme 37 sind zueinander geneigt angeordnete Verlängerungen der durch Traversen 59 miteinander verbundenen Längsholme 60. Das vordere Ende 61 des unteren Gelenkgliedes ist dabei selbst gabelförmig, um einen großen Schwenkbereich des Steilförderers vor allem in die Richtung zum Turm hin zu ermöglichen. Damit erfüllt das Anlenkjoch 7' seine Funktion als vorderes Gelenkglied 7 des Parallelogrammgestänges und als Aufhängeglied für den Steilförderer, welches eine ungehinderte Verschwenkung des letzteren in beiden Richtungen ermöglicht.

Zur Bewerkstelligung dieser Verschwenkung des Steilförderers 9 in der Förderebene 38 sind zwei hydraulische Kraftzylinderpaare 18, 18 und 19, 19 vorgesehen, eines oberhalb und das andere unterhalb des Anlenkjochrahmens 25, bzw. der Anlenkachse 14. Die Kraftzylinder eines solchen Paares sind in der Förderebene 38 an der Vorder- und Hinterseite des Steilförderers 9, zu diesem geneigt angeordnet und jeweils mit ihrem einen Ende an einer am Steilförderer 9 befestigten Konsole 39, und mit ihrem anderen Ende am Rahmen 25 des Anlenkjoches 7' angelenkt. Ihre Wirkungsweise während eines Verschwenkvorganges ist gegenläufig, d. h. wenn die Kolbenstange des einen Zylinders 18 herausgedrückt wird, wird zugleich die Kolbenstange des anderen Zylinders 18 zurückgezogen. Zwei auf der gleichen Seite des Steilförderers 9 angeordnete Kraftzylinder 18, 19 wirken zueinander ebenfalls gegenläufig. Der Steilförderer 9 kann auch mit nur einem Kraftzylinderpaar 18, 18 oder 19, 19 verschwenkt werden.

Die dargestellte Anordnung mit zwei Zylinderpaaren besitzt jedoch den Vorteil, daß die auf den Steilförderer 9 einwirkenden Zug- und Druckkräfte sich gegenseitig ausgleichen, so daß keine Ausstellkräfte, sondern lediglich ein Ausstellmoment auf die Lagerung des Steilförderers 9 übertragen wird.

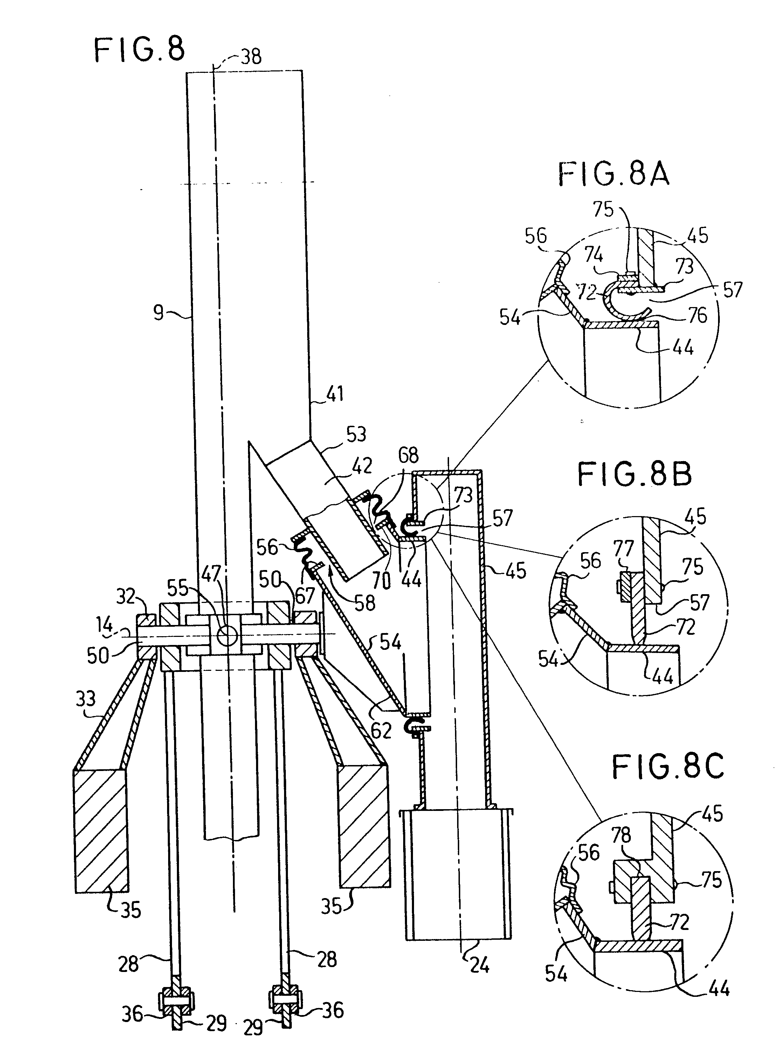

In den Fig. 2 und 3 sind noch rechteckige Befestigungsplatten 40 sichtbar, die an den Seiten des Steilförderers 9 einander gegenüberstehend fest angebracht und durch den Zapfen 31' durchdrungen sind. Am oberen Teil des Steilförderers 9 ist ein seitlich herausragender Auswurfkasten 41 vorgesehen, an welchen ein als Austragsvorrichtung 42 dienender Auslauftrichter 43 angeschlossen ist. Am Ausgangsende 62 dieses Trichters 43 ist eine Ring- oder Ausgangsöffnung 46 vorgesehen. Das Ausgangsende 62 bzw. die Ausgangsöffnung 46 mündet auf der Seite des Zapfens 31' in den Einlaufkasten 45 des Auslegerförderers 24 ein. Dieser Ring 44 ist mit dem Einlaufkasten 45 in axialer Richtung des Zapfens 31' im wesentlichen unbeweglich verbunden, jedoch um die Schwenkachse 31 des Steilförderers 9 herum drehbeweglich angeordnet. Bei einer Verschwenkung des Steilförderers 9 wird das Ausgangsende des Auslauftrichters 43 im Einlaufkasten 45 verdreht, ohne daß ein Lösen der betreffenden Verbindung zustande käme. Eine Dichtung ist zwischen der kreisförmigen Scheibe 44 und dem Einlaufkasten 45 angeordnet und kann gemäß den in Fig. 8, 8A, 8B, 8C gezeigten und noch zu beschreibenden Anordnungen gebildet werden.

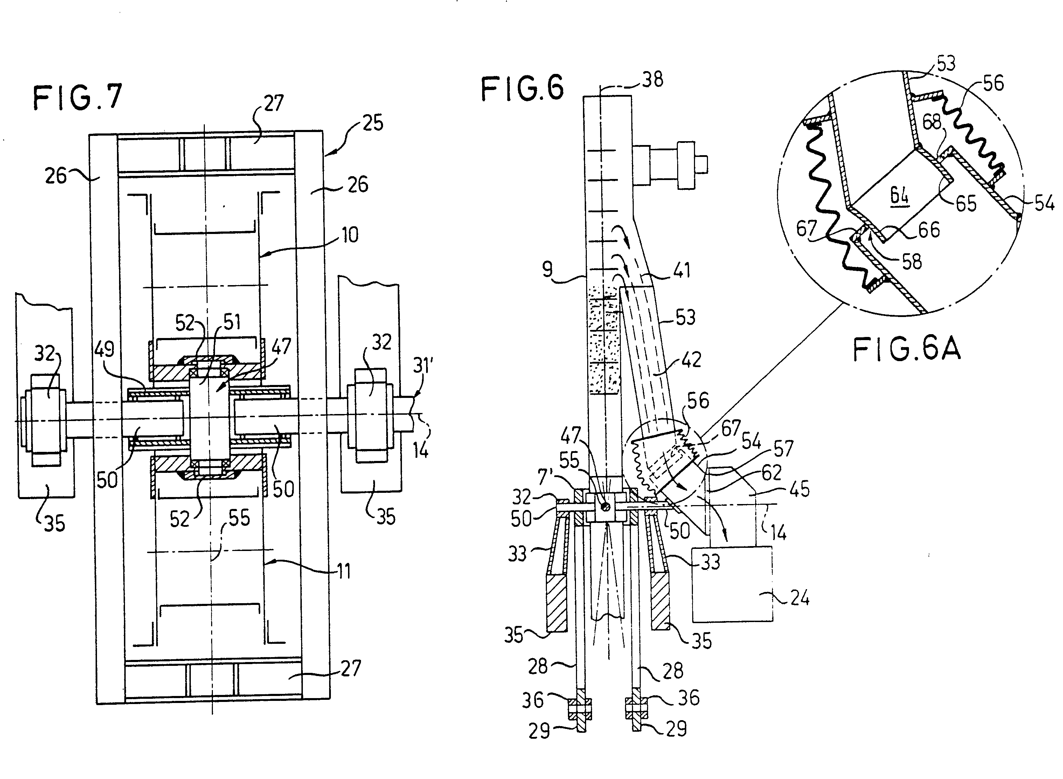

Bei der in der Fig. 6 dargestellten, bevorzugten Ausführungsform der Fördereinrichtung ist eine von zwei die erste Schwenkachse 31 bestimmenden Drehzapfen 50 getragene, den Steilförderer 9 abstützende Drehachse 47 vorgesehen, welche eine zweite Schwenkachse 55 bestimmt. Diese verläuft senkrecht zur ersten Schwenkachse 31 und erlaubt eine zusätzliche, seitliche Verschwenkung des Steilförderers 9 aus der vertikalen, mittleren Lage der Förderebene 38.

Die Drehzapfen 50 und die Drehachse 47 sind in einer universalen oder kardanischen Aufhängung 48 zusammengefaßt, die in der Fig. 7 einen Rahmen 49 aufweist, an welchem die zwei in den Lagern 32 der Gabelarme 35 des oberen Auslegergliedes 5 drehbar gelagerte Drehzapfen 50 befestigt sind.

Zwischen den beiden Drehzapfen 50 verläuft in der Ebene der letzteren, in der Querrichtung, eine als Drehachse 47 dienende Drehwelle 51, die relativ zum Rahmen 49 feststehend und in Lagern 52 der Tröge 10, 11 drehbar gelagert ist.

Bei dieser Ausführungsform weist die Austragsvorrichtung 42 in der Fig. 6 ein an den Auswurfkasten 41 angeschlossenes Oberteil 53 und ein mit diesem teleskopierend verbundenes Unterteil 54 auf. Das Unterteil 54 mündet mit seinem Ausgangsende koaxial zu der ersten Schwenkachse 31 in die Einlauföffnung des Einlaufkastens 45 ein, und ist, ähnlich wie bei den Ausführungsformen nach den Fig. 3 und 8, mit dem Einlaufkasten 45 in axialer Richtung der ersten Schwenkachse 31 im wesentlichen unbeweglich, um die erste Schwenkachse 31 herum hingegen drehbeweglich angeordnet. Die teleskopierende Verbindung 58, welche in der Fig. 6A in größerem Maßstab dargestellt ist, ist in dem zur Drehachse 47 am nächsten liegenden Bereich der Austragsvorrichtung 42 angeordnet. Die Teleskopierbewegung verläuft entlang einer kreisförmigen Bahn, deren Mittelpunkt sich auf der zweiten Schwenkachse 55 befindet. Eine, die bewegliche Verbindung umgebende Dichtmanschette bzw. Balgdichtung 56 ist mit beiden Teilen 53, 54 dicht verbunden und sorgt für eine staubfreie Einspeisung des Schüttgutes in den Einlaufkasten 45. In diesem Beispiel ist das Auslaufende 64 des Oberteils 53 quadratisch im Querschnitt mit zwei gekrümmten Seiten 65, 66. Das Krümmungszentrum dieser Seiten liegt ebenfalls auf der Schwenkachse 55, so daß lediglich ein sehr kleiner und leicht anzudichtender Spalt 68 zwischen dem Auslaufende 64 des Oberteils und einer das Einlaufende des Unterteils begrenzenden Platte 67 notwendig ist.

Wenn der Steilförderer 9 in der Förderebene 38 verschwenkt wird, wird die Austragsvorrichtung 42 mitverschwenkt, wobei sich der Unterteil 54 in der Einlauföffnung 57 um die Schwenkachse 31 herum ungehindert verdrehen kann. Der Schwenkwinkel kann dabei beliebig sein und ist lediglich durch die Hublänge der Schwenkzylinder 18, 19 begrenzt.

Wenn die Verschwenkung um die Schwenkachse 55 herum in einer zur Förderebene 38 senkrechten Querebene stattfindet, bleibt der Unterteil 54 feststehend, jedoch der Oberteil 53 wird mit dem Förderer 9 mitverschwenkt und relativ zum Unterteil 54 verschoben. Diese Verschiebung ist über die teleskopierende Verbindung 58 der beiden Teile 53, 54 möglich. Der Stellförderer 9 kann auch durch kombinierte Verschwenkung in beliebiger Richtung ohne jegliche Störung des Betriebes verschwenkt werden.

Einzelheiten einer bevorzugten Austragsvorrichtung sind in Fig. 8 und 8A dargestellt. Der Steilförderer 9 der Anordnung gemäß Fig. 8 ist entsprechend der Anordnung gemäß Fig. 6, 7 mittels einer zwischen den Trögen angeordneten kardanischen Aufhängung von Ausleger 2 getragen. Die Austragvorrichtung 42 weist ebenfalls einen mit dem Austragtrichter 41 fest verbundenen Oberteil 53 und einen vom letzteren getrennten, auf der Seite der Schwenkachsen 31, 55 in den Einlaufkasten 45 einmündenden, mit dem Oberteil 53 beweglich verbundenen Unterteil 54 auf. Der Unterteil 54 ist mit einem der Drehzapfen so fest verbunden und an seinem Ausgangsende 62 in der Einlaufbohrung 57 des Einlaufkastens 45 um die erste Schwenkachse 31 drehbeweglich, in axialer Richtung hingegen unbeweglich angeordnet. In vertikaler Stellung des steilen Förderers 9 entspricht die Steilheit des Unterteiles 54 derjenigen des Oberteiles 53. Die als teleskopierende Verbindung ausgebildete, bewegliche Verbindung 58 ist in einem Bereich der Austragsvorrichtung 42 angeordnet, der zur weiteren Schwenkachse 55 am nächsten liegt. Eine dem Oberteil 53 zugewendete Stirnfläche 70 des Unterteiles verläuft radial in bezug auf die zweite Schwenkachse 55 und senkrecht zur Neigungsrichtung der Teile 53 und 54. Mit diesen Merkmalen wird erreicht, daß bei Verschwenkung des steilen Förderers 1 um die zweite Schwenkachse 55 eine minimale Bewegung des Oberteiles 53 stattfindet.

Die Verbindung 58 dieser Ausführungsform ist etwas einfacher gestaltet als die im Zusammenhang mit der in Fig. 6A beschriebenen Anordnung. Bei der gezeigten Ausbildung läßt man einfach genügend Spielraum 68 zwischen dem Oberteil 53 und der Öffnung in der Platte 67 des Unterteiles 54 um Verklemmungen zu vermeiden. Sowohl das Oberteil 53 als auch das Unterteil 54 sind in diesem Beispiel im Querschnitt kreisrund. Falls aufgrund der Eigenschaften des Produktes und der Größe des Spielraums zu viel Staub in der, die bewegliche Verbindung umgebende Dichtmanschette sammelt, so könnte man auch hier zu der Ausbildung gemäß Fig. 6A zurückgreifen.

Die Dichtmanschette bzw. die Balgdichtung 56 umgibt die bewegliche Verbindung 58 und ist mit den Teilen 53 und 54 fest verbunden. Sie schützt die Verbindung 58 nach außen und sorgt für eine staubfreie Einspeisung des geförderten Produktstromes in den Einlaufkasten 45.

Die Fig. 8A zeigt die ringförmige manschettenartige Gummilippendichtung 72, welche zwischen dem Unterteil 54 und dem Einlaufkasten 45 angeordnet ist. Diese Dichtung ist an dem die Einlaufbohrung 57 begrenzenden Flansch 73 befestigt, z. B. mittels des Bandes 74 und der Schrauben 75 und besitzt eine ringförmige Kontaktfläche 76, welche am Flanschring 44 des Unterteils 54 leicht anliegt. Der Unterteil kann sowohl eine Drehbewegung als auch eine kleine axiale Verschiebung relativ zu dem Einlaufkasten ausüben, ohne die Dichtwirkung der Dichtung 72 zu beeinträchtigen. Fig. 8B und 8C zeigen andere Abdichtungsmöglichkeiten mit einer besonders einfachen Lippendichtung 72, welche preisgünstig herzustellen ist und welche entweder mit einem losen Ring 77 oder in einer Ringnut 78 befestigt werden kann.

Es sind auch andere Ausführungsformen der Erfindung möglich. Der steile Förderer 9 kann relativ zum Ausleger 5 asymmetrisch angeordnet sein. Es können zwei steile Förderer 9 vorgesehen sein. Der Steilförderer kann auch z. B. als Schneckenförderer ausgebildet sein. Die Gelenkrichtung muß nicht unbedingt als eine kardanische Aufhängung ausgebildet sein. Sie kann z. B. auch als Kugelgelenk ausgeführt oder durch zwei in verschiedenen Ebenen verlaufend als einstückige Drehwellen ausgebildete Schwenkachsen verwirklicht sein. Die bewegliche Verbindung 58 zwischen den beiden Teilen 53, 54 kann z. B. eine Faltenbalgverbindung sein. Andere Anordnungen, bei denen die Austragsvorrichtung aus mehr als zwei beweglich zueinander angeordneten Teilen besteht, gegebenenfalls unter Verwendung von mehreren Dichtmanschetten, sind auch ohne weiteres möglich.

Einzelheiten eines besonders vorteilhaft mit der Erfindung verwendbaren Steilförderers sind im Schweizer Patentgesuch 8 563/79-7 bzw. in der EU-A 25 981 der Anmelderin beschrieben worden.

In der üblichen Weise ist der steile Förderer für Schwenkbewegungen in der Förderebene über die Schwenkvorrichtung an einem am Kai fahrbaren und/oder drehbaren Kran bzw. Turm befestigt. Die Schwenkbewegung des steilen Förderers in der Querebene ist jedoch normalerweise eine freie Bewegung. Dies schließt jedoch nicht aus, daß auch die Schwenkbewegung in der Querebene durch eine Stellvorrichtung z. B. eine am Kran befestigte Stellvorrichtung oder aber ein angebundenes Seil gesteuert werden kann.

## Patentansprüche

1. Fördereinrichtung zur steilen Entladung von Schiffen (16) und sonstigen Behältern, mit einem Steilförderer (9), der einen Fördertrog (10) zwischen Aufnahmefuß und Antriebskopf aufweist und an einen einen Auslegerförderer (24) tragenden Ausleger (5) angeschlossen ist, welcher ein Gelenkglied eines Parallelogrammgestänges ist, welches noch einen Turm (2), insbesondere Drehturm als feststehendes, hinteres Gelenkglied (8), ein parallel zum Ausleger verlaufendes, weiteres Gelenkglied (6) und ein dieses mit dem Ausleger (5) verbindendes, vorderes Gelenkglied (7) aufweist, welches aus seitlich des Steilförderers angeordneten Gliedern (26, 27, 30) besteht und welches bei einem Auf- und Abfahren des Auslegers (5) seine Neigung relativ zu einer Vertikalen beibehält, und wobei der Steilförderer (9) um eine horizontale, erste Schwenkachse (31) am vorderen Gelenkglied (7) angelenkt ist und in einer parallel zur Ebene des Parallelogrammgestänges verlaufenden Förderebene durch Kraftzylinder-Kraft um diese erste Schwenkachse (31) relativ zum vorderen Gelenkglied verschwenkbar ist, dadurch gekennzeichnet, daß die Schwenkachse (31) des Steilförderers (9) mit einer Anlenkachse (14 oder 15) des vorderen Gelenkgliedes (7) am Parallelogrammgestänge zusammenfällt, und daß die seitlich des Steilförderers (9) angeordneten Glieder (26, 27, 30) des vorderen Gelenkgliedes (7) einen Durchgangsraum für eine ungehinderte Verschwenkung des Steilförderers aus seiner vertikalen Stellung (17) in beiden Richtungen vom Drehturm (2) weg und zum Drehturm (2) hin bilden.

2. Fördereinrichtung nach Anspruch 1, dadurch gekennzeichnet, daß sowohl das vordere Ende des Auslegers (5) als auch das vordere Ende des weiteren Gelenkgliedes (6) gabelförmig ausgebildet sind.

3. Fördereinrichtung nach einem der vorhergehenden Ansprüche, dadurch gekennzeichnet, daß die Schwenkachse des Steilförderers (9) mit der Anlenkachse (14) des vorderen Gelenkgliedes (7) am Ausleger (5) zusammenfällt.

4. Fördereinrichtung nach einem der vorhergehenden Ansprüche, dadurch gekennzeichnet, daß die Glieder des vorderen Gelenkglieds (7) einen Rahmen (25) mit zwei von diesem nach unten oder nach oben ragenden Schenkeln (28) bilden und daß der Rahmen (25) am Ausleger (5) und die Schenkel (28) am parallel zum Ausleger (5) verlaufenden Gelenkglied (6) angelenkt sind.

5. Fördereinrichtung nach Anspruch 4, dadurch gekennzeichnet, daß jeweils ein Schenkel (28) zwei zueinander geneigt angeordnete Stäbe (30) aufweist, die an ihren einen Enden mit dem Rahmen (25) und an ihren anderen Enden mit einer am parallel zum Ausleger (5) verlaufenden Gelenkglied (6) angelenkten Lasche (29) fest verbunden sind.

6. Fördereinrichtung nach Anspruch 1, dadurch gekennzeichnet, daß auf einer Seite der Schwenkachse (31) des Steilförderers (9) mindestens zwei zueinander gegenläufig oder entgegengesetzt wirkende Kraftzylinder (18, 18 bzw. 19, 19) angeordnet sind, die mit ihren einen Enden am Steilförderer (9), und ihren anderen Enden am vorderen Gelenkglied schwenkbar (7) angelenkt sind, und daß der eine Kraftzylinder (18 bzw. 19) an der Vorderseite, und an der anderen (18 bzw. 19) an der Hinterseite des Steilförderers (9) angebracht ist.

7. Fördereinrichtung nach Anspruch 6, dadurch gekennzeichnet, daß eine Mehrzahl von an beiden Seiten der Schwenkachse des Steilförderers (9) angeordnete, miteinander zusammenwirkende Kraftzylinder vorgesehen sind, die aufeinander so abgestimmt sind, daß die beim Ausstellen des Steilförderers (9) auf diesen einwirkenden Ausstellkräfte sich gegenseitig ausgleichen, so daß auf den Steilförderer (9) lediglich ein Ausstellmoment wirksam bleibt.

8. Fördereinrichtung nach den Ansprüchen 6 oder 7, dadurch gekennzeichnet, daß auf beiden Seiten der Schwenkachse (31) des Steilförderers (9) je zwei zueinander gegenläufig wirkende Kraftzylinder (18, 18 bzw. 19, 19) gleicher Größe vorgesehen sind.

9. Fördereinrichtung nach Anspruch 1, dadurch gekennzeichnet, daß das vordere Ende des Auslegers (5) als Gabel (34) mit zwei Armen (35) ausgebildet ist, und daß am Ende jedes Armes (35) eine Konsole (33) fest angebracht ist, auf welcher ein Lager (32) zur Lagerung eines die Schwenkachse (31) bestimmenden Drehzapfens (31; 50) befestigt ist.

10. Fördereinrichtung nach Anspruch 9, dadurch gekennzeichnet, daß die Konsolen (33) von den Armen (35) nach oben ragen.

11. Fördereinrichtung nach Anspruch 4, dadurch gekennzeichnet, daß das parallel zum Ausleger (5) verlaufende Gelenkglied (6) als Halterahmen (6') mit Längsholmen (60) und Traversen (59) ausgebildet ist und daß am vorderen Ende des Halterahmens (6') die Längsholme (60) zu einander geneigt sind und je eine Anlenkgabel (36) aufweisen, in welcher ein Schenkel (28) des vorderen Gelenkgliedes (7) angelenkt ist.

12. Fördereinrichtung nach einem der vorhergehenden Ansprüche, dadurch gekennzeichnet, daß in der Längsrichtung des Auslegers (5) in Abständen voneinander angeordnete Zwischenstücke (21) vorgesehen sind, die mit ihren oberen Enden am Ausleger (5) und mit ihren unteren Enden am Halterahmen (6') schwenkbar angelenkt sind.

13. Fördereinrichtung nach einem der vorhergehenden Ansprüche, dadurch gekennzeichnet, daß der Steilförderer (9) durch eine von zwei die erste Schwenkachse (31) bestimmenden Drehzapfen (50) getragene zweite Drehachse (47) abgestützt ist, die quer zu den Drehzapfen (50) und mit diesen in einer Ebene angeordnet ist und eine seitliche Verschwenkung des Steilförderers (9) aus der vertikalen, mittleren Lage der Förderebene (38) um die von dieser Drehachse (47) bestimmte zweite Schwenkachse (55) erlaubt.

14. Fördereinrichtung nach Anspruch 13, dadurch gekennzeichnet, daß die in Lagern (32) des Auslegers (5) drehbar gelagerten Drehzapfen (50) und die zweite Drehachse (47) an einem Rahmen (49) angeordnet sind und mit diesem eine kardanische Aufhängung (48) bilden.

15. Fördereinrichtung nach einem der Ansprüche 13 oder 14, bei welcher eine Austragsvorrichtung (42) des Steilförderers (9) seitlich der Förderebene (38) angeordnet ist und in einem Einlaufkasten (45) des Auslegerförderers (24) einmündet, dadurch gekennzeichnet, daß die Austragsvorrichtung (42) an ihrem Eingangsende mit einem an den Fördertrog (10) angeschlossenen Auswurfkasten (41) fest verbunden ist und ein koaxial zu der ersten Schwenkachse (31) angeordnetes Ausgangsende (62) besitzt, welches in den Einlaufkasten (45) einmündet und relativ zu diesem um die erste Schwenkachse (31) drehbeweglich angeordnet ist und daß das Eingangsende der Austragevorrichtung (42) in einem stromaufwärts gelegenen Oberteil (53) und ihr Ausgangsende (62) in einem mit einem die erste Schwenkachse (31) bestimmenden Drehzapfen (50) fest verbundenen, stromabwärts gelegenen Unterteil (54) ausgebildet ist, und daß das Oberteil (53) über eine teleskopierende Verbindung (58) mit dem Unterteil (54) verbunden ist, wodurch eine Verschwenkung des steilen Förderers (9) seitlich aus der Förderebene um seine zweite Schwenkachse (55) stattfinden kann, ohne die durch die Austragsvorrichtung (42) begrenzte Austragsbahn zu unterbrechen.

16. Fördereinrichtung nach Anspruch 15, dadurch gekennzeichnet, daß die teleskopierende Verbindung (58) in dem zur zweiten Schwenkachse (55) am nächsten liegenden Bereich der Austragsvorrichtung (42) angeordnet ist und die Teleskopierbewegung zwischen den teleskopierenden Enden der beiden Teile (53, 54) entlang einer kreisförmigen Bahn verläuft, deren Mittelpunkt sich auf der zweiten Schwenkachse (55) befindet.

17. Fördereinrichtung nach einem der Ansprüche 15 und 16, dadurch gekennzeichnet, daß die teleskopierende Verbindung (58) durch eine vorzugsweise manschettenartige oder balgartige Dichtung (56) abgedichtet ist.

18. Fördereinrichtung nach einem der vorhergehenden Ansprüche, dadurch gekennzeichnet, daß der Förderer sowohl einen Fördertrog (10) als auch einen Rücklauftrog (11) aufweist.

19. Fördereinrichtung nach Anspruch 14, dadurch gekennzeichnet, daß der Förderer sowohl einen Fördertrog (10) als auch einen Rücklauftrog (11) aufweist, daß die zweite Schwenkachse (55) durch eine zwischen den beiden Drehzapfen (50) hindurchgehende, in Lagern (52) der Tröge (10, 11) drehbar gelagerte Drehwelle (51) bestimmt ist und daß der Rahmen der kardanischen Aufhängung zwischen den Trögen (10, 11) angeordnet ist.

20. Fördereinrichtung nach einem der vorhergehenden Ansprüche, dadurch gekennzeichnet, daß der Ausleger (5) als oberes Gelenkglied des Parallelogrammgestänges ausgebildet ist.

21. Fördereinrichtung nach einem der vorhergehenden Ansprüche, dadurch gekennzeichnet, daß zumindest eine die Schwenklage des Parallelogrammgestänges bestimmende Fluidzylinderanordnung (5a) zwischen dem Parallelogrammgestänge und dem Turm angeordnet ist.

**Claims**

1. Elevator conveyor for unloading ships or other containers comprising an elevator (9) which has an elevator casing (10) between the intake boot and the drive head and which is connected to a boom (5) carrying a boom conveyor (24), wherein the boom is a link of a parallelogram linkage which also has a tower (2), in particular a rotary tower, as a fixed rear link (8), a further link (6) which extends parallel to the boom (5) and a front link (7) which connects the further link with the boom (5), wherein the front link consists of members (26, 27, 30) arranged to the side of the elevator and retains its inclination relative to a vertical during lifting and lowering of the boom (5), and wherein the elevator (9) is pivotally connected to the front link (7) about a horizontal, first pivot axis (31) and can be pivoted about this first pivot axis (31), relative to the front link in a conveying plane extending parallel to the plane of the parallelogram linkage, by the force of power cylinders, characterized in that the pivot axis (31) of the elevator (9) coincides with a hinge axis (14 or 15) of the front link (7) in the parallelogram linkage; and in that the members (26, 27, 30) of the front link (7) arranged to the side of the elevator (9) form a through-space for unhindered pivoting of the elevator out of its vertical position (17) in both directions away from and towards the rotary tower (2).

2. An elevator conveyor in accordance with claim 1, characterized in that both the front end of the boom (5) and also the front end of the further link (6) are of fork-like construction.

3. An elevator conveyor in accordance with one of the preceding claims, characterized in that the pivot axis of the elevator (9) coincides with the hinge axis (14) of the front link (7) at the boom (5).

4. An elevator conveyor in accordance with one of the preceding claims, characterized in that the members of the front link (7) form a frame (25) with two limbs (28) extending upwardly or downwardly from the frame; and in that the frame (25) is pivotally connected to the boom (5) and the limbs (28) are pivotally connected to the link (6) which extends parallel to the boom (5).

5. An elevator conveyor in accordance with claim 4, characterized in that each limb (28) has two bars (30) which are arranged at an angle to one another and are fixedly connected at their one ends to the frame (25) and at their other ends to a lug (29) on the link (6) which extends parallel to the boom (5).

6. An elevator conveyor in accordance with claim 1, characterized in that at least two counter-operating or oppositely working power cylinders (18, 18 and/or 19, 19) are arranged on one side of the pivot axis (31) of the elevator (9) and are pivotally connected by their one ends to the elevator (9) and by their other ends of the front link (7); and in that one power cylinder (18 or 19) is attached to the front side of the elevator (9) and the other (18 or 19) is attached to the rear side of the elevator (9).

7. An elevator conveyor in accordance with claim 6, characterized in that a plurality of cooperating power cylinders are arranged on both sides of the pivot axis of the elevator (9) and are also matched to each other so that the positioning forces which act on the elevator on positioning the elevator mutually balance each other in such a way that only a positioning torque acts on the elevator (9).

8. An elevator conveyor in accordance with the claims 6 or 7, characterized in that two counter-operating power cylinders (18, 18 and 19, 19) of the same size are provided on each of the two sides of the pivot axis (31) of the elevator (9).

9. An elevator conveyor in accordance with claim 1, characterized in that the front end of the boom (5) is constructed as a fork (34) with two arms (35); in that a bracket (33), to which is secured a bearing (32) for supporting a rotary journal (31; 50) which defines the pivot axis (31), is fixedly attached to the end of each arm (35).

10. An elevator conveyor in accordance with claim 9, characterized in that the brackets (33) project upwardly from the arms (35).

11. An elevator conveyor in accordance with claim 4, characterized in that the link (6) which extends parallel to the boom (5) is constructed as a retaining frame (6') with side rails (60) and cross ties (59); and in that the side rails (60) are inclined to one another at the front end of the retaining frame (6') and each have a pivot fork (36) in which one limb (28) of the front link (7) is pivotally mounted.

12. An elevator conveyor in accordance with one of the preceding claims, characterized in that intermediate supports (21) spaced apart in the longitudinal direction of the boom (5) are provided and are pivotally connected at their upper ends to the boom (5) and at their lower ends to the retaining frame (6').

13. An elevator conveyor in accordance with one of the preceding claims, characterized in that the elevator (9) is supported by a second pivot axle (47) which is carried by two rotary journals (50) which define the first pivot axis (31), with the second pivot axle being arranged transverse to the rotary journals (50), in one plane therewith, and permitting a sideways pivotal movement of the elevator (9) out of the vertical central position of the conveying plane (38) about the second pivot axis (55) defined by the second pivot axle (47).

14. An elevator conveyor in accordance with claim 13, characterized in that the two rotary journals (50), which are rotatably mounted in bearings (32) of the boom (5), and the second pivot axle (47) are arranged in a frame (49) and form a cardan suspension (48) with the latter.

15. An elevator conveyor in accordance with one of the claims 13 or 14, in which a discharge device (42) of the elevator (9) is arranged to the side of the conveying plane (38) and opens into an inflow box (45) of the boom conveyor (24), characterized in that the discharge device (42) is fixedly connected at its input end with an ejection box (41) connected to the conveyor casing (10) and has an output end (62), coaxially arranged relative to the first pivot axis (31), with the output end (62) opening into the inflow box (45) and being arranged for movement relative to the inflow box (45) about the first pivot axis (31); in that the input end of the discharge device (42) is constructed as an upper, upstream part (53) and its output end (62) as a lower, downstream part (54) which is fixedly connected with a rotary journal (50) which defines the first pivot axis (31); and in that the upper part (53) is connected with the lower part (54) via a telescope connection (58), whereby pivoting of the elevator (9) sideways out of the conveyor plane about its second pivot axis (55) can take place without interrupting the discharge path bounded by the discharge device (42).

16. An elevator conveyor in accordance with claim 15, characterized in that the telescoping connection (58) is arranged in the region of the discharge device (42) which lies closest to the second pivot axis (55); and in that the telescope movement between the telescoping ends of the two parts (53, 54) takes place along a circular track the centre of which is located on the second pivot axis (55).

17. An elevator conveyor in accordance with one of the claims 15 and 16, characterized in that the telescoping connection (58) is sealed by a seal (56) which is preferably cuff-like or bellowslike.

18. An elevator conveyor in accordance with one of the preceding claims, characterized in that the conveyor has both an elevator casing (10) and a return casing (11).

19. An elevator conveyor in accordance with claim 14, characterized in that the elevator has both an elevator casing (10) and also a return casing (11); in that the second pivot axis (55) is defined by a rotatable shaft (51) which passes between the two rotary journals (50) and is rotatably supported in bearings (52) of the casings (10, 11); and in that the frame of the cardan suspension is arranged between the casings (10, 11).

20. An elevator conveyor in accordance with one of the preceding claims, characterized in that the boom (5) is constructed as the upper link of the parallelogram linkage.

21. An elevator conveyor in accordance with one of the preceding claims, characterized in that at least one fluid-cylinder arrangement (5a) for determining the inclined position of the parallelogram linkage is arranged between the parallelogram linkage and the tower.

**Revendications**

1. Dispositif de transport pour le déchargement incliné de bateaux (16) et d'autres récipients, comprenant un transporteur incliné (9) qui présente une auge de transport (10) entre le pied de réception et la tête de commande et est raccordé à une flèche (5) portant un transporteur à flèche (24), qui est un élément articulé d'un système de tiges en parallélogramme, qui présente encore une tour (2), en particulier une tour rotative sous la forme d'un élément d'articulation postérieur (8) fixe, un autre élément d'articulation (6) s'étendant parallèlement à la flèche et un élément d'articulation antérieur (7) reliant l'élément (6) à la flèche (5) et qui est constitué par des éléments (26, 27, 30) disposés latéralement par rapport au transporteur incliné et qui conserve son inclinaison par rapport à une verticale lors d'une montée et lors d'une descente de la flèche (5), le transporteur incliné (9) étant alors articulé sur l'élément d'articulation antérieur (7) autour d'un premier axe de pivotement (31) horizontal et pouvant pivoter dans un plan de transport s'étendant parallèlement au plan du système de tiges en parallélogramme par la force de vérins de puissance autour de ce premier axe de pivotement (31) relativement à l'élément d'articulation antérieur, caractérisé en ce que l'axe de pivotement (31) du transporteur incliné (9) coincide avec un axe d'articulation (14 ou 15) de l'élément antérieur d'articulation (7) sur le système de tiges en parallélogramme, et en ce que les éléments (26, 27, 30), disposés latéralement par rapport au transporteur incliné (9), de l'élément antérieur d'articulation (7) forment un espace de passage permettant un pivotement sans aucune gêne du transporteur incliné de sa position verticale (17) dans les deux directions vers la tour rotative (2) et à l'écart de celle-ci.

2. Dispositif de transport selon la revendication 1, caractérisé en ce qu'à la fois l'extrémité antérieure de la flèche (5) et l'extrémité antérieure de l'autre élément d'articulation (6) sont réalisées en forme de fourche.

3. Dispositif de transport selon l'une des revendications précédentes, caractérisé en ce que l'axe de pivotement du transporteur incliné (9) coincide avec l'axe d'articulation (14) de l'élément antérieur d'articulation (7) sur la flèche (5).

4. Dispositif de transport selon l'une des revendications précédentes, caractérisé en ce que les éléments de l'élément antérieur d'articulation (7) constituent un bâti (25) ayant deux branches (28) dépassant de celui-ci vers le bas ou vers le haut et en ce que le bâti (25) est articulé sur la flèche (5) et les branches (28) sur l'élément d'articulation (6) s'étendant parallèlement à la flèche (5).

5. Dispositif de transport selon la revendication 4, caractérisé en ce que chaque branche respective (28) comporte deux barres (30) disposées de façon inclinée l'une par rapport à l'autre et qui sont reliées fixement à leurs premières extrémités au bâti (25) et à leurs autres extrémités à une patte (29) articulée sur l'élément d'articulation (6) s'étendant parallèlement à la flèche (5).

6. Dispositif de transport selon la revendication 1, caractérisé en ce que sur un côté de l'axe de pivotement (31) du transporteur incliné (9), on dispose au moins deux vérins de puissance (18, 18 ou 19, 19) agissant à contre-sens ou de façon opposée l'un par rapport à l'autre et qui sont articulés par leurs premières extrémités sur le transporteur incliné (9) et par leurs autres extrémités sur l'élément antérieur d'articulation (7), de façon pivotante, et en ce que l'un des vérins de puissance (18 ou 19) est disposé sur le côté antérieur et l'autre (18 ou 19) vérin de puissance est disposé sur le côté postérieur du transporteur incliné (9).

7. Dispositif de transport selon la revendication 6, caractérisé en ce qu'on prévoit plusieurs vérins de puissance disposés des deux côtés de l'axe de pivotement du transporteur incliné (9) et coopérant les uns avec les autres, qui sont ajustés mutuellement de telle manière que les forces de déviation agissant sur le transporteur incliné (9) lors de sa déviation s'équilibrent mutuellement afin que ne subsiste de façon active sur le transporteur incliné (9) qu'un seul moment de déviation.

8. Dispositif de transport selon les revendications 6 ou 7, caractérisé en ce que des deux côtés de l'axe de pivotement (31) du transporteur incliné (9), on prévoit deux vérins de puissance respectifs (18, 18 ou 19, 19) de même importance agissant à contre-sens l'un par rapport à l'autre.

9. Dispositif de transport selon la revendication 1, caractérisé en ce que l'extrémité antérieure de la flèche (5) est réalisée comme une fourche (34) ayant deux bras (35) et en ce que, à l'extrémité de chaque bras (35), on dispose de façon fixe une console (33) sur laquelle on fixe un palier (32) pour monter un tourillon de rotation (31, 50) déterminant l'axe de pivotement (31).

10. Dispositif de transport selon la revendication 9, caractérisé en ce que les consoles (33) dépassent vers le haut des bras (35).

11. Dispositif de transport selon la revendication 4, caractérisé en ce que l'élément d'articulation (6) s'étendant parallèlement à la flèche (5) est réalisé comme un bâti de maintien (6') ayant des longerons (60) et des traverses (59) et en ce que, à l'extrémité antérieure du bâti de maintien (6'), les longerons (60) sont inclinés l'un par rapport à l'autre et présentent une fourche d'articulation respective (36) dans laquelle s'articule une branche (28) de l'élément antérieur d'articulation (7).

12. Dispositif de transport selon l'une des revendications précédentes, caractérisé en ce que dans la direction longitudinale de la flèche (5), on prévoit des appuis intermédiaires (21) disposés à certaines distances l'un par rapport à l'autre et qui sont articulés par leurs extrémités supérieures sur la flèche (5) et par leurs extrémités inférieures sur le bâti de maintien (6'), de façon à pouvoir pivoter.

13. Dispositif de transport selon l'une des revendications précédentes, caractérisé en ce que le transporteur incliné (9) est supporté par un deuxième axe de rotation (47) porté par deux tourillons de rotation (50) déterminant le premier axe de pivotement (31) et qui est disposé transversalement par rapport au tourillon de rotation (50) dans un seul plan avec celui-ci et permet un pivotement latéral du transporteur incliné (9) à partir de la position médiane verticale du plan du transporteur (38) autour du deuxième axe de pivotement (55) déterminé par cet axe de rotation (47).

14. Dispositif de transport selon la revendication 13, caractérisé en ce que les tourillons de rotation (50) montés pour pouvoir tourner dans des paliers (32) de la flèche (5) ainsi que le deuxième axe de pivotement (47) sont disposés sur un bâti (49) et constituent avec ce dernier une suspension (48) à cardan.

15. Dispositif de transport selon l'une des revendications 13 ou 14 dans lequel un dispositif de déchargement (42) du transporteur incliné (9) est disposé latéralement par rapport au plan (38) du transporteur et débouche dans un récipient d'entrée (45) du transporteur (24) à flèche, caractérisé en ce que le dispositif de déchargement (42) est relié de façon fixe à son extrémité d'entrée à un récipient d'évacuation (41) raccordé à l'auge de transport (10) et présente une extrémité de sortie (62) se trouvant coaxialement par rapport au premier axe de pivotement (31) et qui débouche dans le récipient d'entrée (45) et se trouve placé relativement à ce dernier de manière à pouvoir se déplacer par rotation autour du premier axe de pivotement (31), et en ce que l'extrémité d'entrée du dispositif de déchargement (42) est réalisée dans une partie supérieure (53) placée en amont et son extrémité de sortie (62) dans une partie inférieure (54) placée en aval et reliée fixement à un tourillon de rotation (50) déterminant l'axe de pivotement (31), de telle sorte qu'un pivotement du transporteur incliné (9), latéralement depuis le plan de transport autour de son deuxième axe de pivotement (55), peut avoir lieu sans que le trajet de décharge limité par le dispositif de déchargement (42) soit interrompu.

16. Dispositif de transport selon la revendication 15, caractérisé en ce que la liaison télescopique (58) se trouve dans la zone du dispositif de déchargement (42) qui se trouve au plus près du second axe de pivotement (55) et le mouvement télescopique entre les extrémités télescopiques des deux parties (53, 54) a lieu le long d'un trajet circulaire dont le centre se trouve sur le deuxième axe de pivotement (55).

17. Dispositif de transport selon l'une des revendications 15 et 16, caractérisé en ce que la liaison télescopique (58) est étanchéifiée par un joint (56) qui, de préférence est sous la forme d'un manchon ou d'un soufflet.

18. Dispositif de transport selon l'une des revendications précédentes, caractérisé en ce que le transporteur présente à la fois une auge de transport (10) et une auge de retour (11).

19. Dispositif de transport selon la revendication 14, caractérisé en ce que le transporteur présente une auge de transport (10) et une auge de retour (11), en ce que le deuxième axe de pivotement (55) est déterminé par un arbre de rotation (51) passant entre les deux tourillons de rotation (50) et monté de façon à pouvoir tourner dans des paliers (52) des auges (10, 11) et en ce que le bâti de la suspension à cardan se trouve entre les auges (10, 11).

20. Dispositif de transport selon l'une des revendications précédentes, caractérisé en ce que la flèche (5) est réalisée comme un élément supérieur d'articulation du système de tiges en parallélogramme.

21. Dispositif de transport selon l'une des revendications précédentes, caractérisé en ce qu'au moins un dispositif (5a) à vérins hydrauliques déterminant la position pivotante du système de tiges en parallélogramme se trouve entre ce système et la tour.

FIG.1

FIG.3

FIG.2

FIG.4

FIG.5

0 039 487

FIG.7

FIG.6

FIG.6A

0 039 487

FIG.8

FIG.8A

FIG.8B

FIG.8C